# EUROPEAN PATENT APPLICATION

(11) **EP 0 933 261 A2**
(43) Date of publication of application: **04.08.1999**
(21) Application number: 99102067.8
(22) Date of filing: 02.02.1999
(51) Int. Cl.: B60R 16/02

(54) **Distance detecting system for a motor vehicle**

(30) Priority: 03.02.1998 DE 98101814
(71) Applicant: THE WHITAKER CORPORATION, Wilmington, Delaware 19808 (US)
(72) Inventor: The designation of the inventor has not yet been filed
(74) Representative: Heinz-Schäfer, Marion

(57) **Abstract**

A distance detecting system for a motor vehicle is described which consists of at least one distance sensor affixed to the motor vehicle, an evaluating circuit and a display or warning device. To enable the system to be used even with small distances, the actual distance is determined, when the distance has fallen below a limit distance, by means of said limit distance and of information about the distance then covered.

## Description

The invention relates to a distance detecting system for a motor vehicle comprising at least one distance sensor which is directed, in particular, backwards, an evaluating device and a display and/or warning and/or actuating device controlled thereby.

Detecting systems of this type are known. They are used to simplify the entering of parking spaces. Distance-determining sensors which operate using ultrasound, infrared or mm waves are used for this purpose. In conventional systems the distance is reproduced in the form of a bar chart or a acoustic warning signal is emitted at a specific proximity.

Known systems operate well up to a distance of about 20 cm but fail at smaller distances. Particularly when parking, it is advantageous to be able to approach the obstacle to within a few cm or mm.

The object of the invention is to improve upon known detection systems in order to detect smaller distances.

This object is achieved by a distance detecting system having the features of claim 1.

The system according to the invention operates up to and including the range of a few mm. The at least one distance sensor can be directed forwards or backwards, or distance sensors can be directed forwards and backwards respectively.

The sub-claims describe advantageous further developments and examples of the invention.

According to the invention, the necessary position signals will be derived from a speed-detecting system, for example an anti-lock system (ABS) with a wheel sensor or a gear controller with a gear speed sensor, which are already present in vehicles. The signals obtained in the evaluating device can be used not only for providing a display and/or a warning, but also for automatic brake actuation, in other words for providing a so-called "brake assistant" capable of producing signal-controlled brake pressure. When using automatic brake actuation, a warning signal can be dispensed with and the display can possibly also be omitted, since a collision is prevented by automatic actuation of the brake.

The system according to the invention can be used in a further application, more specifically in stop-and-go operations (distance about 20 m), in order to control the distance from the vehicle ahead: the vehicle is accelerated by an intervention on the engine system and decelerated by an intervention on the brake system.

In addition, the travelling speed of the vehicle can be determined from the position signals and the speed relative to an object - toward or away from which the vehicle is moving - can be determined from the distance sensor signals, and the difference between the two speeds can be calculated. This difference is a measure of the danger of the situation and can be used in the decision-making process, for example during braking.

Embodiments of the invention will now be described with reference to the drawings, in which
Figure 1 shows a first embodiment; and
Figure 2 shows a second embodiment.

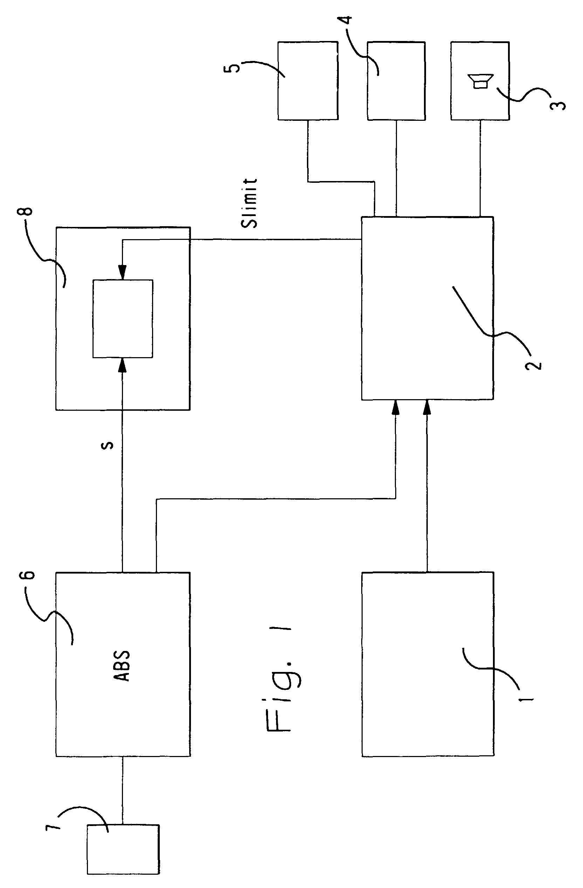

In Figure 1, reference numeral 1 designates a mm-wavelength radar which determines distances, for example only to the rear, and supplies them to an evaluating circuit 2. The evaluating circuit 2 can control: a loudspeaker 3 which emits a warning tone at a specific proximity; and/or a display 4 on which the distance from the obstacle is displayed; and/or a brake assistant 5 which prevents a collision by means of automatic braking.

To enable the detection of even smaller distances (< about 20 cm), the position pulses derived from an ABS 6 comprising a wheel revolution counter 7 are conveyed via a gate 8 to the evaluating circuit 2 after the distance has fallen below a predetermined small distance sₗᵢₘᵢₜ. When the small distance value sₗᵢₘᵢₜ is reached, the gate is opened by the evaluating circuit 2. The evaluating circuit 2 then calculates the actual distance from the distance sₗᵢₘᵢₜ and the incoming pulses, and uses it for display and/or for brake actuation.

A forwardly directed radar can additionally be provided which serves for detecting distance signals in the forward direction and which can be similarly modified for small distances.

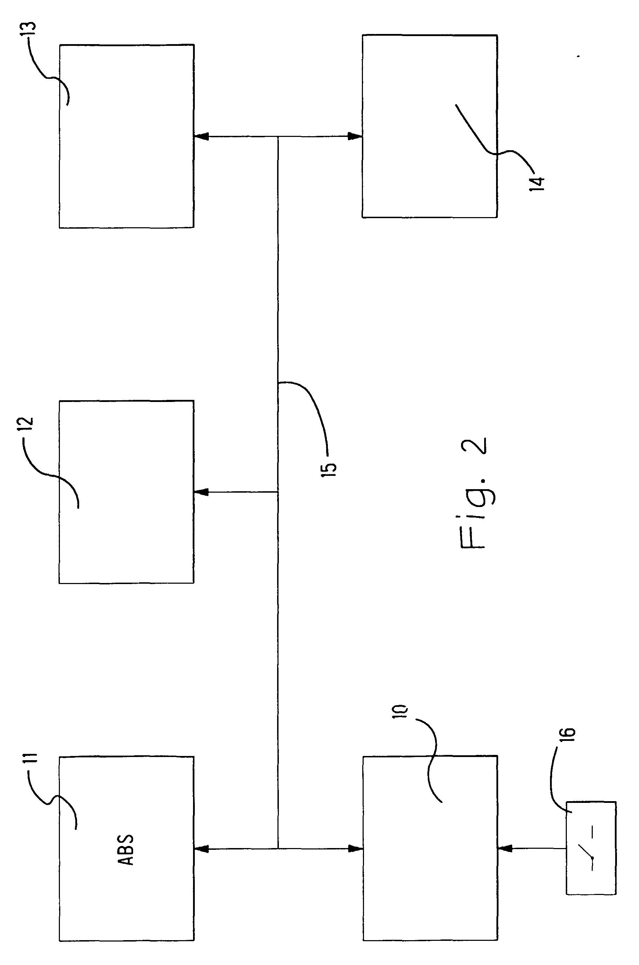

In the embodiment in Figure 2, reference numeral 10 designates the distance measuring and evaluating device (corresponding to 1 and 2 in Figure 1), but in this embodiment comprising sensors to the front and rear, 11 a sensor for obtaining position information, 12 a brake assistant, 13 a display device and 14 an engine controller. The blocks are interconnected by a bus connection 15. Block 10 receives information from a switch 16 as to whether or not the reverse gear is engaged.

Block 10 with its forwardly directed sensor is also used in this embodiment for distance detection and distance control relative to the vehicle ahead during stop-and-go operations, whereby a reduction in distance causes the brakes to be actuated by means of the brake assistant, and whereby an increase in distance causes a control of the engine to increase the vehicle speed.

Figure 1 also shows a conductor 9 via which the vehicle speed detected in the ABS 6 is transmitted to the evaluating circuit 2. The rate of change of distance V₂ from the object, toward or away from which the vehicle is moving, is also detected from the signals of the radar 1 in the evaluating circuit. The evaluating circuit 2 now forms the difference V₁-V₂. This difference is a measure of the danger of the situation and can be used for the decision-making process. If this measure of the danger is significant (rapid approach of the object towards the vehicle), brake pressure must be built up more rapidly than would be the case with a small difference.

With stop-and-go operations using the above-described control, this differential signal could also be used to act upon the engine for increasing vehicle speed. With a large negative difference, the speed can be increased more rapidly.

## Claims

1. Distance detecting system for a motor vehicle comprising at least one distance sensor, an evaluating device and a display and/or warning and/or actuating device controlled thereby, characterized in that, when the distance has fallen below a predetermined small distance, the actual distance is determined by means of said predetermined distance and by means of position signals representing a measure of the distance covered by the vehicle, and said actual distance is used for a display and/or warning and/or actuation.

2. Distance detecting system for a motor vehicle according to claim 1, characterised in that the position signals are derived from an anti-lock (ABS) system.

3. Distance detecting system for a motor vehicle according to claim 2, characterised in that an anti-lock (ABS) system is provided with wheel sensors from which the position signals are derived.

4. Distance detecting system for a motor vehicle according to claim 1, characterized in that the position signals are derived from a gear controller.

5. Distance detecting system for a motor vehicle according to claim 4, characterized in that a gear controller is provided with a gear speed sensor from which the position signals are derived.

6. Distance detecting system for a motor vehicle according to one of claims 1 to 5, characterized in that the evaluating device uses the detected distance for actuating the brake.

7. Distance detecting system for a motor vehicle comprising at least one distance sensor, an evaluating device and a display and/or warning and/or actuating device controlled thereby, in particular according to one of claims 1 to 6, characterized by its use for displaying and controlling the distance to the vehicle ahead during stop-and-go operations.

8. Distance detecting system for a motor vehicle according to claim 7, characterized in that the evaluating circuit detects a change of distance and then acts upon the engine for increasing the vehicle speed, or actuates the brake.

9. Distance detecting system for a motor vehicle according to any of claims 1 to 8, characterized in that the vehicle travelling speed is determined from the position signals and in that the rate of change of distance between vehicle and object is determined from the distance signals, and in that the difference between these speeds is calculated and that this difference is included in the decision-making process with regard to acting upon the vehicle (intensity of braking and/or engine intervention).
